# EUROPEAN PATENT SPECIFICATION

(11) **EP 2 372 603 B1**
(45) Date of publication and mention of the grant of the patent: **07.05.2014**
(21) Application number: 11156569.3
(22) Date of filing: 02.03.2011
(51) Int. Cl.: G06K 7/10, F25D 29/00, G06K 19/07

(54) **Appliance including a radio frequency identification (RFID) device and method for two-way communication of dynamic data by the appliance via the RFID device**
Gerät mit RFID-Vorrichtung und Verfahren zur Zweiwege-Kommunikation dynamischer Daten mit dem Gerät über die RFID-Vorrichtung
Appareil incluant un dispositif d'identification de fréquence radio (RFID) et procédé de communication bidirectionnelle de données dynamiques par l'appareil via le dispositif RFID

(30) Priority: 30.03.2010 US 749873
(43) Date of publication of application: 05.10.2011
(73) Proprietor: BSH Bosch und Siemens Hausgeräte GmbH, 81739 München (DE)
(72) Inventor: Wolf, Christian, 89407 Dillingen (DE)

(56) References cited:
- EP-A2- 1 479 988
- WO-A1-2010/031012

## Description

### BACKGROUND OF THE INVENTION

### 1. Field of the Invention

The present invention relates to an appliance having a radio frequency identification (RFID) device and a method of communicating via the RFID device, and more particularly, to an appliance having an RFID device operable for two-way communication of dynamic data and a method of performing the two-way communication.

### 2. Related Art

RFID is used in the related art to exchange primarily static information used in the identification and tracking of products. Information pertaining to a product, such as a home appliance, is included in the electronic circuitry of an RFID device, such as a tag attached to the home appliance. In use, a computer enabled device, such as an RFID reader is used by a service technician to read static data from the home appliance that is included in the RFID tag.

When an RFID reader is placed in close proximity to the home appliance, the RFID reader may read, for example, the serial number, type, software version, and other static data from the appliance. In more sophisticated applications, the RFID reader may also obtain a description of a part of the appliance that may need to be replaced, including, for example, the part number, and instructions on how the service technician should replace the part. The software of the RFID reader may then automatically fill out an order form for the part to be replaced, and transmit that information to a service part provider.

In a static communication process, a passive RFID tag that is typically unpowered receives radiation or an electromagnetic field at a tag antenna from the RFID reader. Radio frequency (RF) circuits of the tag may then process the received signals and then communicate an identifying signal, such as an appliance serial number, back to the RFID reader.

An active RFID tag may include a tag antenna, RF circuits, and a power source such as a tag battery. The active RFID tag allows for signals to be received and transmitted by the tag antenna, although this communication is also employed using static data.

Further, there are related art communication techniques where communication is carried out via connected power lines, opto-couplers, and proprietary data techniques.

As such, in the related art, additional functions, such as communicating dynamic data from the home appliance, automatically updating data and included software programs on the home appliance based on the exchange of dynamic data, and running a diagnostic program on the home appliance based on the receipt and exchange of dynamic data has not been implemented.

In each of these configurations, the related art and its use of static RFID communication protocols makes appliances less serviceable and operational. Further, the related art's use of proprietary communication methods also leads to increased complexity and costs associated with the appliance. The present invention overcomes the problems associated with the related art by introducing an appliance having a two-way RFID device for dynamic communication.

EP 1 479 988 A2 discloses a household appliance comprising an electronic control system equipped with transponder reader means and detector means of one or more physical quantities. Detector means include one or more sensor devices, free of wiring and own supply, each having at least one sensitive element for detecting the value of a determined physical quantity typical of the apparatus and/or useful for the control thereof, and an electronic control circuit which, by implementing the functions proper of a transponder, is able to obtain its own supply voltage by drawing energy from the electromagnetic field generated by the radiofrequency communication signal irradiated through the reader means. The electronic control circuit of the sensor devices is designed for sending to said reader means, in the presence of said radiofrequency communication signal, data being representative of detections performed through the respective sensitive element.

WO 2010/031012 A1 discloses a method and system for communicating with an associated home appliance having a micro-controller including providing a master device that emits a signal in response to data indicative of energy operational costs. One or more RFID tags receive the master device signal. The RFID tag(s) are connected to the associated home appliance micro-controller to control the operational mode of the home appliance.

### SUMMARY OF THE INVENTION

A first aspect of the present invention is directed to an appliance including a two-way radio frequency identification (RFID) tag communication of dynamic data. The RFID tag includes an electronic controller structured to control operating functions of the appliance. The RFID tag further includes a storage medium structured to store information about the appliance and computer-executable instructions operable to control the operating functions of the appliance. A transmitter is incorporated allowing the appliance to send and receive dynamic data between the appliance and one or more remote RFID readers using two-way communication protocols at all levels.

The dynamic data is a test script, and the electronic controller is operable to execute the computer-executable instructions to run a diagnostics program, dynamically query the one or more remote RFID readers via the transmitter to obtain a test script based on the results of the diagnostics program, and execute the test script.

A second aspect of the present invention is directed to the aforementioned RFID device.

A third aspect of the present invention is directed to a method of two-way radio frequency identification (RFID) communication between an appliance and one or more remote RFID devices. In the third aspect, the method includes sending and receiving dynamic data between the appliance and the one or more remote RFID devices using two-way communication protocols at all levels. Further, the method in an exemplary embodiment may include recognizing when the one or more remote RFID devices is within a communication range, and initiating the two-way communication. Further, the method includes executing computer-executable instructions to run a diagnostics program, dynamically querying the one or more remote RFID devices to obtain the test script based on the results of the diagnostics program, and executing the test script.

The illustrative aspects of the present invention are designed to solve the problems herein described and other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various exemplary embodiments of the disclosure, in which:
FIG. 1 depicts an appliance incorporating a two-way RFID device communicating with a remote RFID device according to an exemplary embodiment of the present invention;
FIG. 2 depicts an RFID device according to an exemplary embodiment of the invention; and
FIG. 3 depicts a method of communicating dynamic data according to an exemplary embodiment of the invention.

The drawings are merely schematic representations, not intended to portray specific parameters of the invention. The drawings are intended to depict only typical embodiments of the invention, and therefore should not be considered as limiting the scope of the invention. In the drawings, like numbering represents like elements.

### DETAILED DESCRIPTION OF THE INVENTION

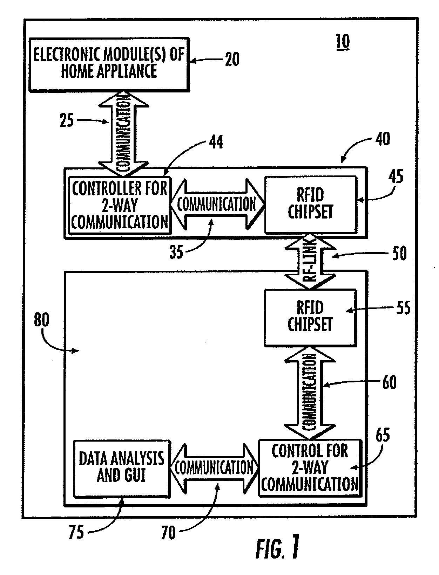

FIG. 1 shows an exemplary embodiment of an appliance 10 incorporating a two-way communication RFID device 40 for dynamic data transfer and communication with one or more remote RFID devices 80. The RFID device 40 may be integrated into an appliance electronic control module 20 or provided separately as an add-on as shown in FIG. 1. The electronic control module 20 may control functions of the appliance 10, as well as store information about the appliance 10, and this information may be communicated with the one or more remote RFID devices 80 via RFID device 40 using communication protocols at all levels, or to another electronic device through other communication means, such as connection to the internet (not shown).

The two-way RFID device 40 may include a controller 44 for two-way communication and an RFID chipset 45, and communicate with the electronic control module 20 through communication link 25. Likewise, the controller 44 and RFID chipset 45 may communicate between each other through communication link 35.

The RFID device 40 communicates dynamic data in a two-way communication process through radio frequency (RF) link 50 to the one or more remote RFID devices 80. The one or more remote RFID devices 80 may include, for example, an RFID reader used by an appliance service technician to service the appliance.

To this end, the one or more remote RFID devices 80 may have a data analysis module and graphic user interface 75 allowing a technician to receive dynamic data from the RFID device 40 and appropriately respond to a request from the RFID device 40 by analyzing the request and transmitting a response in the form of, for example, a diagnostics program, a software update used to control the appliance, a test script, and the like.

The one or more remote RFID devices 80 may further include a controller 65 for two-way communication through communication link 60 with an RFID chipset 55 and may also communicate with the data analysis module and graphic user interface 75 through communication link 70.

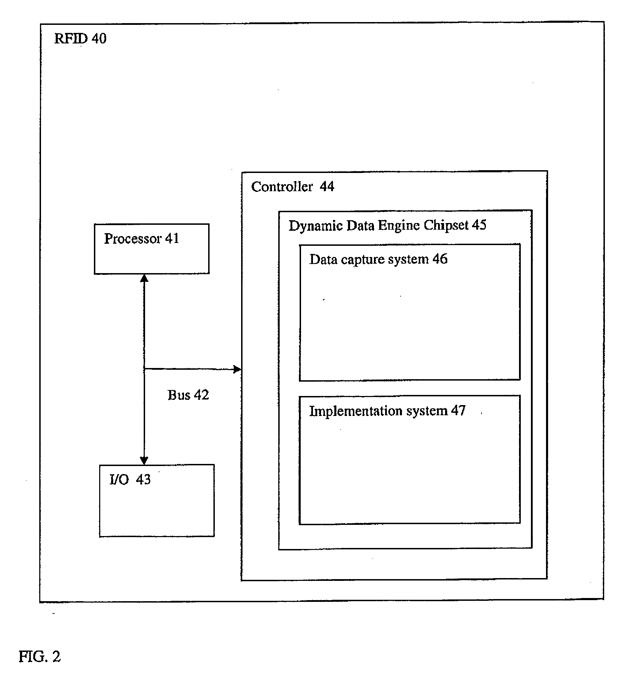

FIG. 2 depicts an exemplary embodiment of an RFID device 40 according to an exemplary embodiment of the invention.

The RFID device 40 may include any electronic architecture that will enable the RFID device 40 to communicate dynamic data in a network using radio frequency protocols in a two-way communication process.

The RFID device 40 may include a processor 41, an input/output (I/O) 43, a controller 44, and integrated or separate from the controller 44, a dynamic data engine chipset 45 for storing a data capture system 46 and an implementation system 47. The data capture system 46 and implementation system 47 may be disposed in a memory (not shown) and are used for capturing, storing, processing, and implementing the dynamic data (e.g., as a program product that can be executed by processor 41). This may include test scripts, queries from the appliance, control software for the appliance, or any other forms of dynamic data used to control, operate, repair, and perform two-way communications of dynamic data. As is known in the art, in general, processor 41 executes computer program code that is stored in, for example, data capture system 46 or implementation system 47. While executing computer program code, processor 41 can read and/or write data to/from the data capture system 46, implementation system 47, and/or I/O interface 24. Bus 42 provides a communications link between each of the components in RFID device 40. I/O device 43 can comprise any device that enables interaction with RFID device 40. In each case, the program code and hardware of RFID device 40, in exemplary embodiments, may be created using standard programming and engineering techniques.

Accordingly, it is understood that some of the various systems shown in FIG. 2 can be implemented independently, combined, and/or stored in memory for one or more separate computing devices that are included in RFID device 40 that allow for two-way communication of dynamic data. Further, it is understood that some of the systems and/or functionality may not be implemented, or additional systems and/or functionality may be included as part of RFID device 40.

While not depicted in FIG. 1, the physical structure of the appliance of the present invention outside of the novel RFID device described herein may be any appliance known in the related art and may include, for example, a refrigerator or dishwasher.

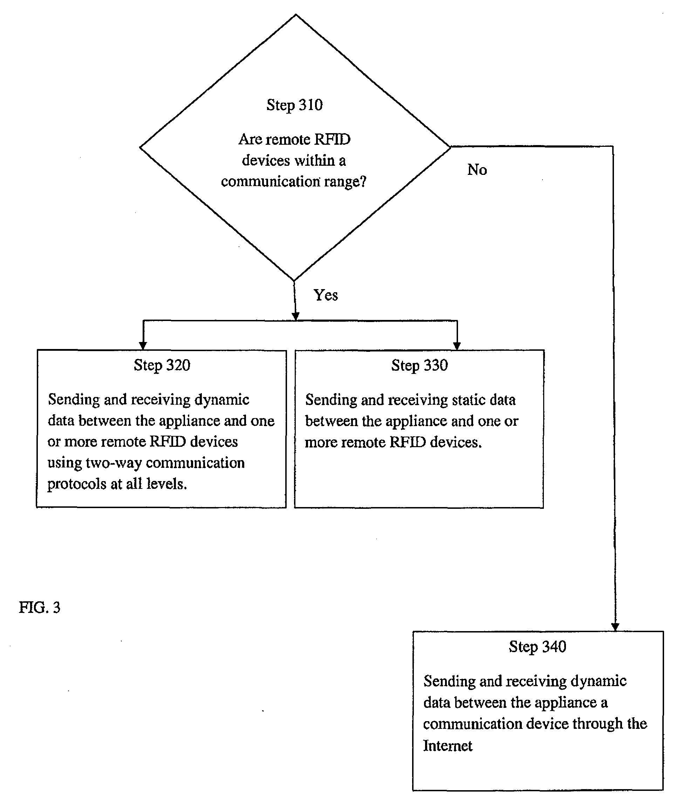

FIG. 3 depicts a method of communication of dynamic data according to an exemplary embodiment of the invention.

In a method of the invention, two-way RFID communication of dynamic data between an appliance and one or more remote RFID devices is performed. The method may include at step 310, recognizing when one or more remote RFID devices is within a communication range, and initiating the two-way communication. Step 310 may be done periodically on a schedule to save a power source of the RFID device, or the RFID device may be set to an active status at all times. At step 320, dynamic data may be sent and received between the appliance and the one or more remote RFID devices using two-way communication protocols at all levels.

The method may also include communicating statically with the one or more remote RFID devices at step 330, for example, when data is requested by an RFID device where dynamic data and associated functions are not needed, such as a simple request for a serial number of the appliance.

In exemplary embodiments, for example, the dynamic data obtained at step 320 may be a test script, and the appliance may execute computer-executable instructions to run a diagnostics program, dynamically query the one or more remote RFID devices to obtain the test script based on the results of the diagnostics program, capture the test script at data capture system 46, and execute the test script in the implementation system 47.

In another exemplary embodiment, the dynamic data obtained at step 320 may include computer-executable instructions, and the appliance through the RFID device, may query the one or more remote RFID devices to obtain updates to computer-executable instructions used to operate the appliance.

Further still, the one or more remote RFID devices, may be queried, and when the dynamic data sought by the two-way RFID device at step 320 is not available, at step 340 the appliance may communicate with another communication device to obtain the dynamic data, such as through accessing the appliance manufacturers' website through an internet connection.

## Claims

1. A two-way radio frequency identification (RFID) tag (40) integrated with an appliance (10), the two-way RFID tag (40) comprising:
an electronic controller (44) structured to control operating functions of the appliance (10);
a storage medium (45) structured to store information about the appliance (10) and computer-executable instructions operable to control the operating functions of the appliance (10); and
a transmitter (43) operable to send and receive dynamic data between the appliance (10) and one or more remote RFID readers (80) using two-way communication protocols at all levels,
**characterized in that**
the dynamic data is a test script, and the electronic controller (44) is operable to execute the computer-executable instructions to run a diagnostics program, dynamically query the one or more remote RFID readers (80) via the transmitter (43) to obtain a test script based on the results of the diagnostics program, and execute the test script.

2. The two-way RFID tag (40) of claim 1, wherein the electronic controller (44) is operable to recognize when the one or more remote RFID readers (80) is within a communication range.

3. The two-way RFID tag (40) of claim 1, wherein the electronic controller (44) includes logic incorporated as firmware operable to enable at least one of static and dynamic communication with the one or more remote RFID readers (80).

4. The two-way RFID tag (40) of claim 1, wherein the electronic controller (44) is operable to dynamically query the one or more remote RFID readers (80) via the transmitter (43) to obtain updates to the computer-executable instructions.

5. The two-way RFID tag (40) of claim 1, wherein the electronic controller (44) is operable to periodically query the one or more remote RFID readers (80) to obtain the dynamic data.

6. The two-way RFID tag (40) of claim 1, wherein the one or more RFID readers (80) is operable to query the one or more remote RFID readers (80), determine whether the one or more remote RFID readers (80) includes an appropriate set of dynamic data sought by the two-way RFID tag (40), and if not, instruct the appliance (10) to communicate with another communication device to obtain the dynamic data.

7. The two-way RFID tag (40) of claim 6, wherein the another communication device is connected to the appliance (10) via an internet protocol.

8. A method of two-way radio frequency identification (RFID) communication between an appliance (10) and one or more remote RFID readers (80), the method comprising:
sending and receiving dynamic data between the appliance (10) and the one or more remote RFID readers (80) using two-way communication protocols at all levels,
**characterized in that**
the dynamic data is a test script, and further comprising executing computer-executable instructions to run a diagnostics program, dynamically querying the one or more remote RFID readers (80) to obtain the test script based on the results of the diagnostics program, and executing the test script.

9. The method of claim 8, further comprising recognizing when the one or more remote RFID readers (80) is within a communication range, and initiating the two-way communication.

10. The method of claim 8, further comprising communicating statically with the one or more remote RFID readers (80).

11. The method of claim 8, further comprising dynamically querying the one or more remote RFID readers (80) to obtain updates to computer-executable instructions included in a storage medium (45) of the appliance (10).

12. The method claim 8, further comprising periodically querying the one or more remote RFID readers (80) to obtain the dynamic data.

13. The method of claim 8, further comprising querying the one or more remote RFID readers (80), determining whether the one or more remote RFID readers (80) includes an appropriate set of dynamic data sought by the two-way RFID tag (40), and if not, communicating with another communication device to obtain the dynamic data.

14. The method of claim 13, wherein the appliance communicates with the another communication device via an internet protocol.

15. An appliance, comprising:
a two-way radio frequency identification (RFID) tag (40) according to claim 1.

16. The appliance of claim 15, wherein the electronic controller (44) is operable to recognize when the one or more remote RFID readers (80) is within a communication range.

17. The appliance claim 15, wherein the electronic controller (44) includes logic incorporated as firmware operable to enable at least one of static and dynamic communication with the one or more remote RFID readers (80).

18. The appliance of claim 15, wherein the dynamic data is a test script, and the electronic controller (44) is operable to execute the computer-executable instructions to run a diagnostics program, dynamically query the one or more remote RFID readers (80) via the transmitter (43) to obtain a test script based on the results of the diagnostics program, and execute the test script.

## Patentansprüche

1. In eine Vorrichtung (10) integriertes Zweiwege-RFID-Etikett (Radio Frequency Identification) (40)., das Folgendes umfasst:
eine elektronische Steuerung (44), die so angelegt ist, dass sie Betriebsfunktionen der Vorrichtung (10) steuert,
ein Speichermedium (45), das so angelegt ist, dass es Informationen über die Vorrichtung (10) und per Computer ausführbare Anweisungen speichert, die zum Steuern der Betriebsfunktionen der Vorrichtung (10) dienen, und
einen Sender (43), der zum Senden und Empfangen dynamischer Daten zwischen der Vorrichtung (10) und einem oder mehreren fernen RFID-Lesegeräten (80) mit Hilfe von Zweiwegekommunikationsprotokollen auf allen Ebenen dient,
**dadurch gekennzeichnet, dass**
es sich bei den dynamischen Daten um ein Testscript handelt und die elektronische Steuerung (44) dazu dient, die der per Computer ausführbaren Anweisungen auszuführen, um ein Diagnoseprogramm auszuführen, dynamisch das eine oder die mehreren fernen RFID-Lesegeräte (80) über den Sender (43) abzufragen, um ein auf den Ergebnissen des Diagnoseprogramms beruhendes Testscript zu erhalten, und das Testscript auszuführen.

2. Zweiwege-RFID-Etikett (40) nach Anspruch 1, bei dem die elektronische Steuerung (44) dazu dient zu erkennen, wann sich das eine oder die mehreren fernen RFID-Lesegeräte (80) innerhalb eines Übertragungsbereichs befinden.

3. Zweiwege-RFID-Etikett (40) nach Anspruch 1, bei dem die elektronische Steuerung (44) Logik enthält, die als Firmware vorliegt, welche dazu dient, zumindest eine statische oder eine dynamische Kommunikation mit dem einen oder den mehreren fernen RFID-Lesegeräten (80) zu ermöglichen.

4. Zweiwege-RFID-Etikett (40) nach Anspruch 1, bei dem die elektronische Steuerung (44) dazu dient, das eine oder die mehreren fernen RFID-Lesegeräte (80) über den Sender (43) dynamisch abzufragen, um Aktualisierungen für die per Computer ausführbaren Anweisungen zu erhalten.

5. Zweiwege-RFID-Etikett (40) nach Anspruch 1, bei dem die elektronische Steuerung (44) dazu dient, das eine oder die mehreren fernen RFID-Lesegeräte (80) regelmäßig abzufragen, um die dynamischen Daten zu erhalten.

6. Zweiwege-RFID-Etikett (40) nach Anspruch 1, bei dem das eine oder die mehreren RFID-Lesegeräte (80) dazu dienen, das eine oder die mehreren fernen Lesegeräte (80) abzufragen, zu bestimmen, ob das eine oder die mehreren fernen RFID-Lesegeräte (80) einen entsprechenden Satz vom Zweiwege-RFID-Etikett (40) gesuchter dynamischer Daten enthalten und wenn nicht, die Vorrichtung (10) anzuweisen, mit einer anderen Kommunikationseinrichtung zu kommunizieren, um die dynamischen Daten zu erhalten.

7. Zweiwege-RFID-Etikett (40) nach Anspruch 6, bei dem die andere Kommunikationseinrichtung über ein Internet-Protokoll mit der Vorrichtung (10) verbunden ist.

8. Verfahren für die Zweiwege-RFID-Kommunikation (Radio Frequency Identification) zwischen einer Vorrichtung (10) und einem oder mehreren fernen RFID-Lesegeräten (80), das Folgendes umfasst:
das Senden und Empfangen dynamischer Daten zwischen der Vorrichtung (10) und dem einen oder den mehreren fernen RFID-Lesegeräten (80) mit Hilfe von Zweiwegekommunikationsprotokollen auf allen Ebenen,
**dadurch gekennzeichnet, dass**
es sich bei den dynamischen Daten um ein Testscript handelt, und ferner Folgendes umfasst: das Ausführen von per Computer ausführbaren Anweisungen zum Ausführen eines Diagnoseprogramms, das dynamische Abfragen des einen oder der mehreren fernen RFID-Lesegeräte (80), um das auf den Ergebnissen des Diagnoseprogramms beruhende Testscript zu erhalten, und das Ausführen des Testscripts.

9. Verfahren nach Anspruch 8, das ferner das Erkennen, wann sich das eine oder die mehreren fernen RFID-Lesegeräte (80) innerhalb eines Übertragungsbereichs befinden, und das Starten der Zweiwegekommunikation umfasst.

10. Verfahren nach Anspruch 8, das ferner das statische Kommunizieren mit dem einen oder den mehreren fernen RFID-Lesegeräten (80) umfasst.

11. Verfahren nach Anspruch 8, das ferner das dynamische Abfragen des einen oder der mehreren fernen RFID-Lesegeräte (80) zum Erhalten von Aktualisierungen für per Computer ausführbare Anweisungen umfasst, die in einem Speichermedium (45) der Vorrichtung (10) enthalten sind.

12. Verfahren nach Anspruch 8, das ferner das regelmäßige Abfragen des einen oder der mehreren fernen RFID-Lesegeräte (80) zum Erhalten der dynamischen Daten umfasst.

13. Verfahren nach Anspruch 8, das ferner Folgendes umfasst:
das Abfragen des einen oder der mehreren RFID-Lesegeräte (80), das Bestimmen, ob das eine oder die mehreren fernen RFID-Lesegeräte (80) einen entsprechenden Satz von dem Zweiwege-RFID-Etikett (40) gesuchter dynamischer Daten enthalten und wenn nicht, das Kommunizieren mit einer anderen Kommunikationseinrichtung zum Erhalten der dynamischen Daten.

14. Verfahren nach Anspruch 13, bei dem die Vorrichtung über ein Internet-Protokoll mit der anderen Kommunikationseinrichtung kommuniziert.

15. Vorrichtung, die Folgendes umfasst:
ein Zweiwege-RFID-Etikett (Radio Frequency Identification) (40) nach Anspruch 1.

16. Vorrichtung nach Anspruch 15, bei der die elektronische Steuerung (44) dazu dient zu erkennen, wann sich das eine oder die mehreren fernen RFID-Lesegeräte (80) innerhalb eines Übertragungsbereichs befinden.

17. Vorrichtung nach Anspruch 15, bei der die elektronische Steuerung (44) Logik enthält, die als Firmware vorliegt, welche dazu dient, zumindest eine statische oder eine dynamische Kommunikation mit dem einen oder den mehreren fernen RFID-Lesegeräten (80) zu ermöglichen.

18. Vorrichtung nach Anspruch 15, bei der es sich bei den dynamischen Daten um ein Testscript handelt und die elektronische Steuerung (44) dazu dient, die per Computer ausführbaren Anweisungen auszuführen, um ein Diagnoseprogramm auszuführen, dynamisch das eine oder die mehreren fernen RFID-Lesegeräte (80) über den Sender (43) abzufragen, um ein auf den Ergebnissen des Diagnoseprogramms beruhendes Testscript zu erhalten, und das Testscript auszuführen.

## Revendications

1. Étiquette (40) d'identification par radiofréquence (IRF) bidirectionnelle intégrée à un appareil (10), l'étiquette IRF bidirectionnelle (40) comprenant :
un dispositif de commande électronique (44) structuré pour commander des fonctions opérationnelles de l'appareil (10) ;
un support d'enregistrement (45) structuré pour enregistrer des informations concernant l'appareil (10) et des instructions exécutables par ordinateur pouvant être mises en oeuvre pour commander les fonctions opérationnelles de l'appareil (10) ; et
un émetteur (43) pouvant être actionné pour émettre et recevoir des données dynamiques entre l'appareil (10) et un ou des lecteurs IRF distants (80) en utilisant des protocoles de communication bidirectionnelle à tous les niveaux,
**caractérisée en ce que**
les données dynamiques sont un script de test et le dispositif de commande électronique (44) peut fonctionner pour exécuter les instructions exécutables par ordinateur pour qu'un programme de diagnostic s'exécute, adresser des requêtes dynamiques au lecteur ou aux lecteurs IRF distants (80) par le biais de l'émetteur (43) pour obtenir un script de test basé sur les résultats du programme de diagnostic et
exécuter le script de test.

2. Étiquette IRF bidirectionnelle (40) selon la revendication 1, dans laquelle le dispositif de commande électronique (44) peut fonctionner pour reconnaître lorsque le ou les lecteurs IRF distants (80) sont à portée de communication.

3. Étiquette IRF bidirectionnelle (40) selon la revendication 1, dans laquelle le dispositif de commande électronique (44) inclut une logique incorporée sous forme de microprogramme pouvant être exécuté pour permettre au moins une communication statique et/ou dynamique avec le ou les lecteurs IRF distants (80).

4. Étiquette IRF bidirectionnelle (40) selon la revendication 1, dans laquelle le dispositif de commande électronique (44) peut fonctionner pour adresser des requêtes dynamiques au lecteur ou aux lecteurs IRF distants (80) par le biais de l'émetteur (43) pour obtenir des mises à jour des instructions exécutables par ordinateur.

5. Étiquette IRF bidirectionnelle (40) selon la revendication 1, dans laquelle le dispositif de commande électronique (44) peut fonctionner pour adresser des requêtes périodiques au lecteur ou aux lecteurs IRF distants (80) pour obtenir les données dynamiques.

6. Étiquette IRF bidirectionnelle (40) selon la revendication 1, dans laquelle le ou les lecteurs IRF distants (80) peuvent fonctionner pour adresser des requêtes au lecteur ou aux lecteurs IRF distants (80), déterminer si le ou les lecteurs IRF distants (80) incluent un ensemble approprié de données dynamiques recherchées par l'étiquette IRF bidirectionnelle (40) et, si tel n'est pas le cas, donner à l'appareil (10) l'instruction de communiquer avec un autre dispositif de communication pour obtenir les données dynamiques.

7. Étiquette IRF bidirectionnelle (40) selon la revendication 6, dans laquelle l'autre dispositif de communication est relié à l'appareil (10) par le biais d'un protocole Internet.

8. Procédé de communication avec identification par radiofréquence (IRF) bidirectionnelle entre un appareil (10) et un ou des lecteurs IRF distants (80), le procédé comprenant :
l'émission et la réception de données dynamiques entre l'appareil (10) et le ou les lecteurs IRF distants (80) en utilisant des protocoles de communication bidirectionnelle à tous les niveaux,
**caractérisé en ce que**
les données dynamiques sont un script de test, et comprenant, en outre, l'exécution d'instructions exécutables par ordinateur pour qu'un programme de diagnostic s'exécute, adresser des requêtes dynamiques au lecteur ou aux lecteurs IRF distants (80) pour obtenir le script de test basé sur les résultats du programme de diagnostic et exécuter le script de test.

9. Procédé selon la revendication 8, comprenant, en outre, le fait de reconnaître lorsque le ou les lecteurs IRF distants (80) sont à portée de communication et d'initier la communication bidirectionnelle.

10. Procédé selon la revendication 8, comprenant, en outre, la communication statique avec le ou les lecteurs IRF distants (80).

11. Procédé selon la revendication 8, comprenant, en outre, l'adressage de requêtes dynamiques au lecteur ou aux lecteurs IRF distants (80) pour obtenir des mises à jour d'instructions exécutables par ordinateur incluses dans un support d'enregistrement (45) de l'appareil (10).

12. Procédé selon la revendication 8, comprenant, en outre, l'adressage de requêtes périodiques au lecteur ou aux lecteurs IRF distants (80) pour obtenir les données dynamiques.

13. Procédé selon la revendication 8, comprenant, en outre, l'adressage de requêtes au lecteur ou aux lecteurs IRF distants (80), la détermination permettant de savoir si le ou les lecteurs IRF distants (80) incluent un ensemble approprié de données dynamiques recherchées par l'étiquette IRF bidirectionnelle (40) et, si tel n'est pas le cas, la communication avec un autre dispositif de communication pour obtenir les données dynamiques.

14. Procédé selon la revendication 13, dans lequel l'appareil communique avec l'autre dispositif de communication par le biais d'un protocole Internet.

15. Appareil, comprenant :
une étiquette d'identification par radiofréquence (IRF) bidirectionnelle (40) selon la revendication 1.

16. Appareil selon la revendication 15, dans lequel le dispositif de commande électronique (44) peut fonctionner pour reconnaître lorsque le ou les lecteurs IRF distants (80) sont à portée de communication.

17. Appareil selon la revendication 15, dans lequel le dispositif de commande électronique (44) inclut une logique incorporée sous forme de microprogramme pour permettre au moins une communication statique et/ou dynamique avec le ou les lecteurs IRF distants (80).

18. Appareil selon la revendication 15, dans lequel les données dynamiques sont un script de test et le dispositif de commande électronique (44) peut fonctionner pour exécuter les instructions exécutables par ordinateur pour qu'un programme de diagnostic s'exécute, adresser des requêtes dynamiques au lecteur ou aux lecteurs IRF distants (80) par le biais de l'émetteur (43) pour obtenir un script de test basé sur les résultats du programme de diagnostic et exécuter le script de test.
